(19) Europäisches Patentamt
European Patent Office
Office européen des brevets

(11) **EP 0 664 179 B1**

(12) **EUROPEAN PATENT SPECIFICATION**

(45) Date of publication and mention
of the grant of the patent:
**08.04.1998 Bulletin 1998/15**

(21) Application number: **94921088.4**

(22) Date of filing: **13.07.1994**

(51) Int. Cl.$^6$: **B23H 7/10**, B23H 7/20

(86) International application number:
**PCT/JP94/01150**

(87) International publication number:
**WO 95/02483 (26.01.1995 Gazette 1995/05)**

(54) **DISPLAY DEVICE FOR INDICATING WIRE CONNECTING CONDITION**

ZUSTANDSANZEIGEVORRICHTUNG FÜR DRAHTVERBINDUNGSVERFAHREN

DISPOSITIF D'AFFICHAGE SERVANT A INDIQUER L'ETAT DE CONNEXION D'UN FIL

(84) Designated Contracting States:
**CH DE LI**

(30) Priority: **13.07.1993 JP 195243/93**

(43) Date of publication of application:
**26.07.1995 Bulletin 1995/30**

(73) Proprietor: **FANUC LTD.**
**Minamitsuru-gun, Yamanashi 401-05 (JP)**

(72) Inventors:
• **KAJITORI, Toyotada**
**Fanuc Dai-3 Vira-karamatsu**
**Yamanashi 401-05 (JP)**

• **MAKI, Susumu**
**Fanuc Dai-3 Vira-karamatsu**
**Minamitsuru-gun Yamanashi 401-05 (JP)**

(74) Representative:
**Billington, Lawrence Emlyn et al**
**Haseltine Lake & Co.,**
**Imperial House,**
**15-19 Kingsway**
**London WC2B 6UD (GB)**

(56) References cited:
JP-A- 1 274 926          JP-A- 2 076 629
JP-A- 5 200 628          JP-A-62 063 019

## Description

The present invention relates to a wire feeding condition detecting device for displaying a feeding condition of a wire in feeding the wire in a wire electric discharge machine, and more specifically, to a display device for displaying a position or a section where the leading end of the wire arrives at present in a wire path. A preferred embodiment of the present invention relates to a wire feeding condition display device, which is capable of displaying information on a wire feeding fault occurrence position by making use of wire feeding fault (wire blocking) detection means.

In a wire electric discharge machine, when a breaking of a wire occurs during electric discharge machining, or when electric discharge machining is carried out along another machining line, a feeding of a wire electrode (hereinafter referred to as a wire) must be carried out. Such a feeding is often executed by a so-called automatic wire feeding, involving feeding a wire to a wire path by operating a wire feed mechanism, and passing it through various sections of the wire electric discharge machine, thus guiding the leading end of the wire to a wire winding section equivalent to an end point of the wire path.

Conventionally, in a case of executing such an automatic wire feeding, it has been unknown that there is a technique for ascertaining a progressing condition of the wire feeding in real time. For this reason, it has been impossible to visually and readily inform an operator of a section where the leading end of the wire is now passing in the wire path. Thus, it is difficult for the operator to easily know where the wire is hard to pass through the wire path.

In particular, in the case where a wire feeding fault (most of the faults are caused when the leading end of the wire is stopped advancing by an obstacle) occurs anywhere in the wire path, it is impossible to immediately detect a position where the feeding fault occurs in the wire path. Also, it is impossible to obtain information on a feeding fault history (distribution of a feeding fault occurrence position) in a wire electric discharge machine with a display screen.

An object of the present invention is to solve the above problem in the prior art by providing a wire feeding condition detecting device, which is capable of clearly displaying a wire feeding condition in real time during an automatic wire feeding. Further, a preferred embodiment of the present invention takes more suitable measures for a wire feeding fault by providing a wire feeding condition detecting device, which is capable of suitably displaying not only information but also history on a feeding fault occurrence position, when a wire feeding fault (wire blocking) occurs.

The present invention provides a wire feeding condition detecting device in a wire electric discharge machine, comprising: wire feed start position detection means for detecting information that the wire leading end passes through a wire feed start position of the wire path when a wire is fed along a wire path by means of wire feed means in an automatic wire feeding operation; wire feed output means for outputting a feed of the wire when the wire is fed along the wire path by means of the wire feed means; wire leading end position computation means for computing a distance between a position where the wire leading end reaches at present in the wire path and the wire feed start position on the basis of a detection signal from the wire feed start position detection means and an output from the wire feed output means; and wire feed condition display means for finding out where the leading end of the wire is located in a plurality of sections into which the wire path is previously divided, on the basis of an output from the wire leading end position computation means, and for displaying the leading end of the wire fed for feeding on the screen so that a place where the leading end arrives at the current time can visually be recognized.

Preferably, the aforesaid device further includes feeding fault occurrence detection means for detecting a condition that the wire can not advance ahead any more because the leading end of the wire fed by the wire feed means is jammed on the midway of the path; and feeding fault display means for displaying information on a section, where a feeding fault occurs in the plurality of sections, on the screen of the wire feed condition display means on the basis of an output from the feeding fault occurrence detection means. Further, the device may be provided with wire feeding fault occurrence count memory means for counting feeding fault occurrence displayed by the display means for every section, and wire feeding fault occurrence count display means for displaying the total count of feeding faults caused in each section in the past on the screen of the wire feed condition display means, on the basis of the storage of the memory means. Furthermore, the aforesaid device may include disconnection information display means which ascertains where a disconnection occurs in a section on the wire path, on the basis of an output from the wire feed output means when a disconnected wire is wound up by reverse rotation of the wire feed means and a signal indicative that the passage of the disconnected portion of the wound-up wire is detected by the wire feed start position detection means, and stores the result in the memory means, thus displaying data stored in the memory means on the display screen by means of the wire feed condition display means.

Also preferably, the aforesaid feeding fault occurrence detection means is located near the wire feed means on the wire path, and detects a feeding fault occurrence by sensing a bending of the wire caused in the case where the advance of wire is obstructed because the wire leading end fed along the wire path by the wire feed means is jammed by any components located along the wire path.

Also preferably, the aforesaid wire feed start detection means also functions as one of paired wire cut electrodes located along the wire path, which is close to the wire feed means.

Furthermore preferably, the wire feed completion detection means is located on the downstream side from the pulling-out roller in the wire traveling direction on the wire path. The feed completion detection means detects completion of a feeding operation when detecting the passage of the leading end of the wire traveling the wire path. The way of partitioning off the wire path is performed by dividing a path between a position where the wire feed start position detection means is situated and a position where the wire feed completion detection means is situated, into plural parts, on the basis of individual positions of at least parts of various elements such as an upper guide, an upper machining electrode, an upper die, a workpiece, a lower die, a lower machining electrode, a turning roller, a guide pipe of the lower frame and a wire pulling-out roller, which are each located on the way of the path.

As described above, in a preferred embodiment of wire feeding condition detecting device of the present invention, a wire feed is successively or in order detected during an automatic wire feeding, and a progressing condition of the wire feeding is displayed in real time in accordance with the detection result. The wire position (typically, the wire leading end position) at each point of time is computed as a wire feed from the wire position (wire feed start position) which is in a reference state. In the case of displaying the aforesaid condition together with information on the wire feeding fault occurrence position, a wire blocking is detected as a wire bending by the wire bending detecting electrode facing the wire path, and a position where a feeding fault occurs is determined on the basis of the wire feed in detecting the bending, thus the position being displayed on the screen of the display means.

## Brief Description of the Drawings

Fig. 1 is a sectional view schematically showing a configuration of a wire electric discharge machine body in which a wire feeding condition is displayed by a wire feeding condition display device according to the present invention;

Fig. 2 is a top view showing an appearance of an electrode 13 shown in Fig. 1;

Fig. 3 is a schematic view showing an appearance of a wire bending detecting electrode 40 shown in Fig. 1;

Fig. 4 is a sectional view of an upper guide for explaining a positional relation of sections set relative to the upper guide in a device according to one embodiment of the present invention;

Fig. 5 is a block diagram schematically showing principal sections of a wire electric discharge machining system including the wire feeding condition display device according to the present invention;

Fig. 6 is a view showing the editing content of the display screen according to one embodiment of the present invention;

Fig. 7 is a data table showing coordinate data on the display screen corresponding to positions Po [00] to Po [11];

Fig. 8 is a flowchart explaining an outline of a process for setting a reference condition of wire according to one embodiment of the present invention;

Fig. 9 is a flowchart explaining an outline of a wire feeding process according to one embodiment of the present invention;

Fig. 10 is a flowchart showing the particulars of a wire feeding condition display process in the flowchart of Fig. 9;

Fig. 11 is a flowchart explaining an outline of a wire feeding fault process, following the flowchart of Fig. 9; and

Fig. 12 is a flowchart explaining an outline of a wire disconnection fault detection/record process according to one embodiment of the present invention.

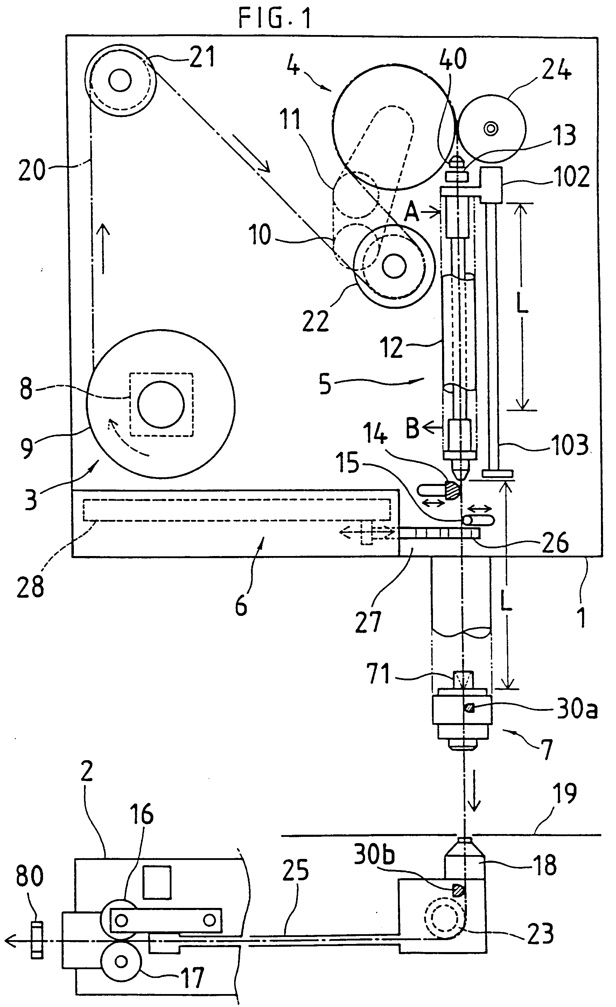

Fig. 1 shows a schematic configuration of a wire electric discharge machine body in which a wire feeding condition is displayed by a wire feeding condition display device according to the present invention.

Referring now to Fig. 1, the wire electric discharge machine body comprises an upper frame 1 and a lower frame 2 which are arranged oppositely to one another, in broadly dividing into two parts. These frames 1 and 2 are integrally coupled with each other by means of a column (not shown). The upper frame 1 is provided with a wire driving or hoisting unit 3, a wire feed roller 4, a wire cutting mechanism 5, a wire retract unit 6, an upper guide 7, and a wire bending detecting electrode 40 which is interposed between the wire feed roller 4 and the wire cutting mechanism 5.

The wire hoisting unit 3 includes a supply reel 9 connected to a winding motor 8, and the wire feed roller 4 is driven by means of a wire feed motor 10 which is rotatable in the normal and reverse direction. A reference number 11 denotes an encoder which is arranged for controlling a wire feed and detects a rotational speed of the wire feed motor 10. The encoder is used in a wire replacement measurement for detecting a position where wire feeding faults occur and breaking of wire occur, as described later.

The wire cutting mechanism 5 is composed of a wire feed pipe unit 12 arranged above the upper guide (nozzle) 7, first and second wire cutting electrodes 13 and 14 which are individually located on the entrance and outlet sides of the pipe unit 12, and a pressure roller 15.

The second wire cutting electrode 14 is also used as a wire leading end detecting electrode in feeding the wire or in detecting a disconnection position. The electrode 14 and the pressure roller 15 are movable so that they are far from and close to the wire path. More specifically, in the case where the electrode 14 and the pressure roller 15 are used as a leading end detecting electrode in a wire cutting operation and in detecting the wire feeding/ disconnection position, they are movable in a slot so as to come into contact with the wire 20 path according to energization control to a solenoid (not shown); on the other hand, in the case where the wire cutting operation is completed, they are far from the wire 20.

The upper guide 7 is provided with an upper machining electrode 30a arranged so as to face the wire path, and energization for machining is carried out between the upper machining electrode and a lower machining electrode 30b in electric discharge machining.

The lower frame 2 is provide with a wire pulling-out roller 16, a pinch roller 17 arranged opposite to the roller 16, and a lower guide 18. On the back side of these rollers, there is provided a feeding completion detector 80 for detecting the arrival of wire in feeding the wire. The detector 80 may be of optional type if the arrival of wire is detectable. A reference number 19 denotes a upper surface of a work table. The lower machining electrode 30b is arranged so that it face the wire path running through the lower guide.

The wire 20 is pulled out of the supply reel 9, and hung onto deflection rollers 21 and 22, thus being guided to the wire feed roller 4. Further, the wire 20 passes through the wire bending detecting electrode 40, a first wire cutting electrode and the wire feed pipe unit 12, and arrives at the upper guide 7. Furthermore, the wire 20 passes through the lower guide 18 so that its running direction is changed by means of a turning roller 23, and arrives at the wire pulling-out roller 16, thus a wire path being formed. The wire 20 travels along the wire path according to a feed of the wire feed roller 4 driven by the wire feed motor 10 and traction of the wire pulling-out roller 16. The lower machining electrode 30b located in the lower guide 18 comes into contact with the traveling wire together with the upper machining electrode 30a, and supplies an electric power to the wire.

In the case where the wire 20 travels at a normal speed during electric discharge machining, the winding motor 8 of the supply reel 9 is in an idling condition; therefore, the roller 9 freely rotates in the direction indicated by the broken-line arrow. On the other hand, in the case of executing automatic wire feeding or disconnection repair due to breaking of wire, the winding motor 8 is driven in the direction reverse to the direction indicated by the broken-line arrow, tension is applied to the wire 20 between the pulling-out roller 16 (during the automatic feeding) and the wire retract unit 5 (during the disconnection repair). In other words, these winding motor 8, pulling-out roller 16 and wire retract unit 6 constitute wire tension applying means.

A reference number 24 denotes a pinch roller which comes into contact with the circumferential surface of the wire feed roller 4 to surely feed the wire 20. A reference number 25 denotes a guide pipe which is interposed between the turning roller 23 and the wire pulling-out roller 16 in the lower frame 2, and the wire 20 passes through the pipe. The wire retract unit 6 is composed of an arm 27 having a clamp portion 26 formed in the distal end portion of the arm, and an air cylinder 28 for retracting the arm. The clamp portion 26 on the distal end is situated on the downstream side of the pressure roller 15, and the wire 20 passes through the clamp portion 26.

The wire feed pipe unit 12 has water conduction and discharge portions (not shown) at each position indicated by each of arrows A and B. In cutting the wire, annealing is executed between positions A and B, and heat treatment for wire cut is executed in a region between the position B and the second wire cutting electrode 14. The wire feed pipe unit 12 is electrically insulated from the wire 20 in this entirety.

The wire feed pipe unit 12 is supported by a slide member 102 together with the first wire cutting electrode 13 having a clamping function. The slide member 102 is lifted up and down by means of drive means (not shown) along a column guide 103 at a distance (length) L between the uppermost position shown in the figure and a positioning portion 71 formed on the upper guide 7. This pipe unit 12 is also used at the time of feeding.

The following is a brief explanation about a structure of the first wire cutting electrode 13 and the wire bending detecting electrode 40.

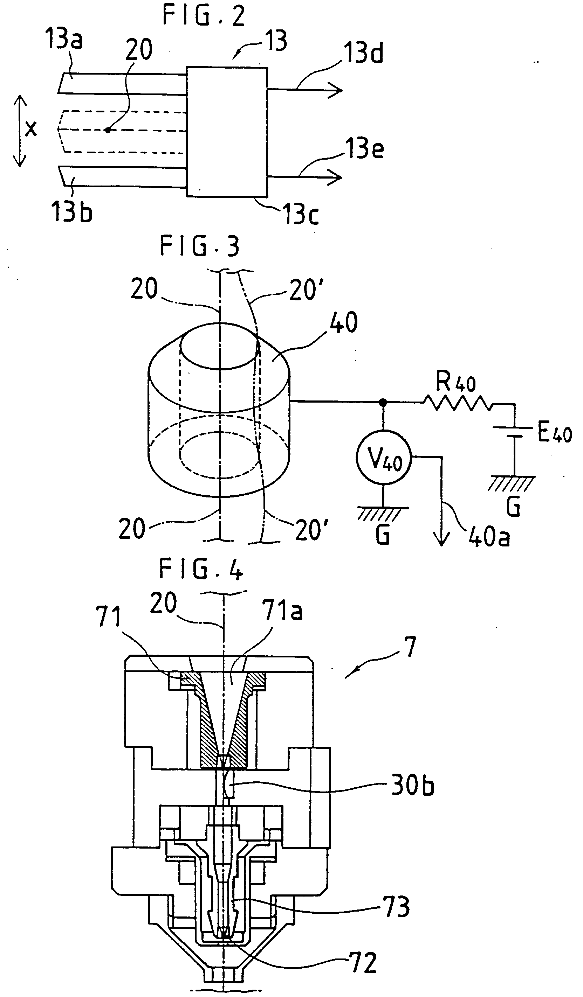

Fig. 2 shows a top view of the first wire cutting electrode 13. In the figure, 13a and 13b are a pair of electrode plates which are supported to an electrode support drive portion 13c so that they are close to or far from each other. The electrode support drive portion 13c includes a solenoid (not shown) for moving these electrode plates 13a and 13b to an open position shown by a solid line and a closed position shown by a broken line. A reference number 13e denotes a cable for energizing the solenoid, and is connected to a control unit of a wire electric discharge machine which will be described later. When these electrode plates 13a and 13b are situated at the open position, the wire 20 is not clamped at all, and is in an electrically non-contact state. On the other hand, when these electrode plates are situated at the closed position, they function as a clamp for clamping the wire 20, and can supply an electric power for cutting a wire to the clamped wire 20 through a lead wire 13d.

The first wire cutting electrode 13 is in a closed state at the time the electrode cuts the wire 20 and at the time the electrode is lifted down over the distance (length) L together with the wire feed pipe unit 12 in executing a wire feeding. In the case other than the cases described above, these electrode plates 13a and 13b are separated from each other, that is, in an open state;

therefore, the wire 20 is in a state that it freely passes through between both electrode plates.

Fig. 3 is a sketch showing an appearance of the wire bending detecting electrode 40 together with principal parts of peripheral circuits of the electrode. The wire bending detecting electrode 40 has a shape of an annulus ring or short pipe, and is connected to an electric-power source E40 for wire bending detection and a voltage detector V40. R40 is a resistor having a proper resistance. The wire bending detecting electrode 40 is used for detecting a feeding fault which occurs when feeding of wire is blocked anywhere in the wire path during a wire feeding process in a wire feeding process.

More specifically, the wire 20 passes through the center of the electrode without coming into contact with the inner wall of the electrode during a smooth wire feed, as shown in Fig. 3. Although the wire does not come in contact with the inner wall of the electrode, when feeding of wire is blocked anywhere in the wire path, the wire is forcedly fed from the wire feed roller 4; for this reason, bending occurs in the wire 20. Thus, the wire comes into contact with the inner wall or the edge of the wire bending detecting electrode 40, as shown by a reference number 20' in Fig. 3. If the wire 20 is kept approximately to an earth potential in a wire feeding, a current flows to the wire 20 from the electric source E40 for wire bending detection by the foregoing contact, and a voltage drop is detected by the voltage detector V40. The detection signal is transmitted to a control unit of a wire electric discharge machine which will be described later through a signal line 40a. (In this connection, there is an idea of supplying a voltage for wire bending detection from another terminal during the wire feeding, and detecting a change in the voltage of the wire bending detecting electrode 40 occurring in the case where the wire comes into contact with the wire bending detecting electrode 40.)

These two electrodes 13 and 40 individually have the structure and function as described above. Also, the second wire cutting electrode 14 and the pressure roller 15 are situated at a position separated from the wire 20 while normal electric discharge machining is carried out by the wire electric discharge machine; therefore, only upper and lower machining electrodes 30a and 30b come into contact with the wire 20 during the normal wire electric discharge machining. In such a state, a current for electric discharge machining flows between the wire 20 and a workpiece (not shown) on the work table 19 to execute electric discharge machining. A working fluid is supplied to the upper and lower guides 7 and 18, and ejected to an electric discharge machining position from each nozzle of these guides, thereby sludge occurring in the machining portion being removed and a cooling treatment for the portion being performed. Further, the working fluid is slowly supplied from the position A, and discharged from the position B.

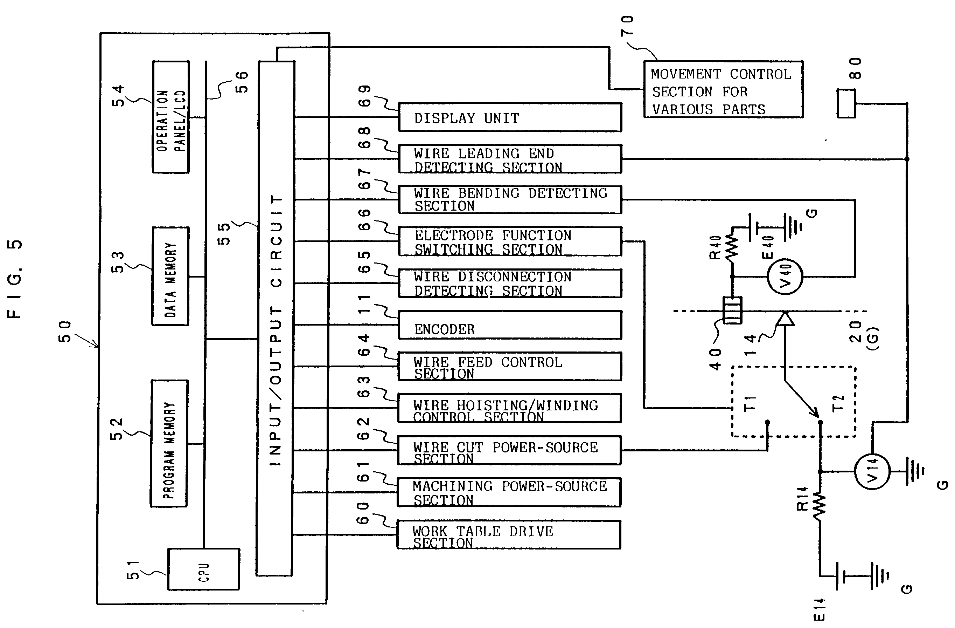

An outline of a configuration of a wire electric discharge machining system including a device for displaying a wire feeding condition will be described below with reference to Fig. 5.

In Fig. 5, there is shown a control device 50 for a wire electric discharge machine including a NC unit for executing position control of the work table 19. The control device 50 for a wire electric discharge machine includes a central processing unit (hereinafter referred to as CPU ) 51 comprising a microprocessor. A program memory 52, data memory 53, operating panel 54 including a liquid crystal display LCD, and an input-output circuit 55 are individually connected to the CPU 51 via a bus 56.

The program memory 52 stores a program for displaying a wire feeding condition, various parts of the wire electric discharge machine, and the control device for a wire electric discharge machine. The data memory 53 stores position data corresponding to machining programs, various setting data for determining other machining conditions, and various data related to a display of a wire feeding condition (such as wire position data and conversion table data of coordinate data on the display screen, which will be later described in detail). Further, the data memory is used as a memory for storing various computation data processed by the CPU 51. In addition, the data memory has a register region for counting an output pulse from an encoder 11 and a register region for storing fault occurrence position data, which will be described later.

Connected to the input-output circuit 55 are a work table drive section 60, machining power-source section 61, wire cut power-source section 62, wire winding/pulling control section 63, wire feed control section 64, encoder 11, wire disconnection detecting section 65, electrode function switching section 66, wire bending detecting section 67, wire leading end detecting section 68, display unit (CRT) 69 and movement control section 70 for controlling various parts of the wire electric discharge machine.

The work table drive section 60 and the machining power-source section 61 have a well-known structure, and are individually controlled according to an ordinary method during a machining execution. The wire cut power-source section 62 supplies required electric power to the first and second electrodes 13 and 14 in order to cut the wire 20 in the heating region of the pipe unit 12. The wire winding/pulling section 63 drives a motor (not shown) for driving the wire pulling-out roller 16 and the winding motor 8.

The wire feed control section 64 controls the drive of the motor 10 for driving the wire feed roller 4, and the rotational speed of the motor 10 is detected by means of the encoder 11, as already described. The disconnection detecting section 65 detects wire disconnection occurring during the machining execution, and makes use of a conventional mechanism (such as systems of detecting a current flowing through the wire, or of detecting tension of the pulling-out roller, for example).

The electrode function switching section 66 switches the function of the second wire cutting electrode 14 to either wire cutting electrode or wire passage detecting electrode, and controls a switching device SW which has a contact T1 connected to the wire cut power-source section 62 and a contact T2 connected to the power source E14 for wire passage detection. When the electrode 14 is connected to the contact T2 (power source E14 for wire passage detection), the wire leading end detecting section 68 detects a potential of the electrode 14 and an output from the feeding completion detector 80, and is connected to a voltmeter V14 and the feeding completion detector 80, which are arranged as shown in Fig. 5. R14 is a resistor element having a proper resistance, and serves to determine contact/non-contact of the electrode 14 with the wire according to a change in the potential of the electrode 14. The power source E14 serves to detect contact/non-contact of the electrode 14 with the wire, and can be of several-volt for usage, for example.

The wire bending detecting section 67 is connected to the aforesaid wire bending detecting electrode 40, and detects the potential of the electrode 40. Further, the detecting section 67 is connected to the voltmeter V40 already described relative to Fig. 3, and determines contact/non-contact of the electrode 40 with the wire according to a change in the potential of the electrode 40. The power source E40 can be of several-volt for usage as in the case of the power source E14 (a combined use of power sources E14 and E40 may be supposed).

The display unit 69 is a unit for displaying information on the position where a wire feeding fault occurs, by various display methods, and displays a wire feeding condition on the CRT screen in accordance with display programs stored in the program memory 62 (The particulars thereof will be described later).

The movement control section 70 is composed of a section for controlling open-and-close operation of the wire cutting electrode 13, a section for advance/retreat movement of the electrode 14, a section for elevating movement of the pipe unit 12 in a wire feeding and other sections.

In a wire electric discharge machine, the CPU 51 executes detection/record processing of disconnection position during normal machining. The content of this processing will be outlined after an explanation about a display of a wire feeding condition is given.

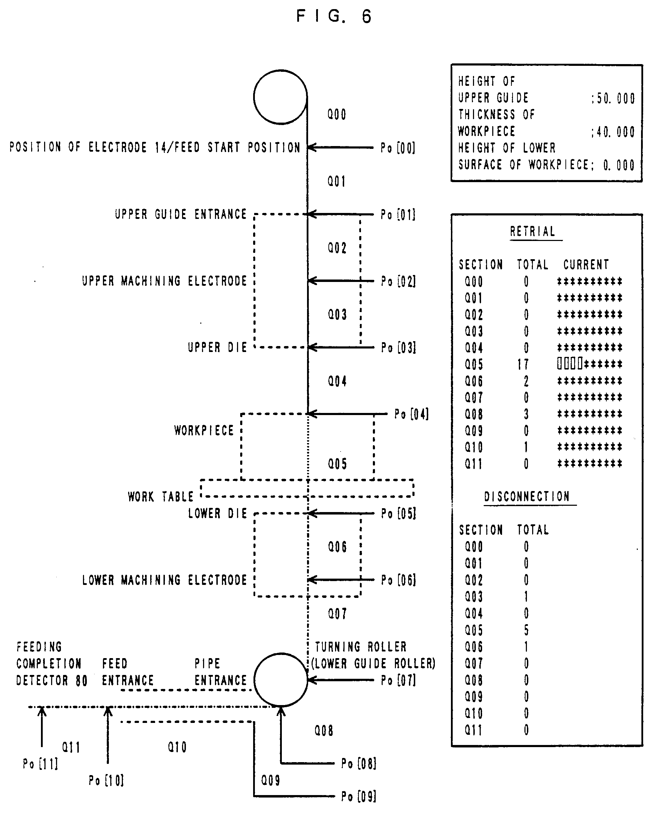

In the present embodiment, an editing screen shown in Fig. 6 is displayed on the CRT screen of the display unit 69 in executing an automatic feeding. The content of the editing screen displayed by the display unit 69 and a principle for displaying are described below with reference to Fig. 4 in addition to Fig. 6.

As shown in Fig. 6, the display unit 69 displays the wire path in the wire electric discharge machine shown in Fig. 1 and sections Q01 to Q11 preset by dividing the path into several parts (in this case, eleven parts), on the CRT screen. On the right side of the screen, feeding and disconnection fault occurrence conditions are displayed together.

The wire path is classified into the respective sections Q01 to Q11. These sections are commonly used as sections for a wire feeding fault occurrence position and further as sections for a wire disconnection fault occurrence position.

    Q00; above Po [00]
    Q01; Po [00] to Po [01]
    Q02; Po [01] to Po [02]
    Q03; Po [02] to Po [03]
    Q04; Po [03] to Po [04]
    Q05; Po [04] to Po [05]
    Q06; Po [05] to Po [06]
    Q07; Po [06] to Po [07]
    Q08; Po [07] to Po [08]
    Q09; Po [08] to Po [09]
    Q10; Po [09] to Po [10]
    Q11; Po [10] to Po [11]

In this case, the respective positions Po [00] to Po [11] are set as follows:

    Po [00]; the position of the electrode 14 (wire feed start position during a wire feeding)
    Po [01]; the position of an entrance of the upper guide 7
    Po [02]; the position of the upper machining electrode 30a
    Po [03]; the position of an upper die (the position close to an outlet of the upper guide 7)
    Po [04]; the position of the upper surface of a workpiece
    Po [05]; the position of a lower die (the position close to an entrance of the lower guide)
    Po [06]; the position of the lower machining electrode 30b
    Po [07]; turning start position of the wire on the turning roller (lower guide roller) 23
    Po [08]; turning start position of the wire on the turning roller (lower guide roller) 23
    Po [09]; an entrance of the guide pipe
    Po [10]; feed section (the upstream side from the pulling-out roller 17
    Po [11]; feeding completion detector 80

Incidentally, Fig. 1 is a little hard to grasp the positions Po [01] to Po [03], so that the brief explanation for these positions is given with reference to Fig. 4. Fig. 4 is an enlarged sectional view of the upper guide 7. The upper portion of the upper guide 7 is provided with a positioning portion 71 for determining the stoppage position of the pipe unit 12 which descends when executing a wire feeding. The positioning portion 71 is located such that a conical-shaped inlet opening portion 71a (position Po [01]) is formed. The upper machining electrode 30a (at position Po [02]) is located below the inlet opening portion 71a so as to face the wire path. An upper die 72 following the upper die guide 73 is located in the vicinity of the outlet of the upper guide 7 (position Po [03]).

Regarding respective boundary points between sections, Po [01] to Po [11], the data memory 52 stores distance data on each point which is measured by setting the point Po [00] to be an original point. The position of the upper guide and the workpiece is variable in general, and data is inputted in a machining condition setting screen (not shown) by a user, thereby distance data of each position being defined. In a column shown in the upper portion on the right side of Fig. 6, data inputted on the machining condition setting screen is displayed as it is (the numerical values shown therein are merely one example).

In the right-side portion on the editing screen of Fig. 6, the number of retrial (number of feeding failures) for every section are displayed on a header "Retrial" display section. In a column of "Total number of feeding fault occurrence", there is displayed the number of feeding fault occurrence for every section for a period of time (for example, one month) following previous resetting of the numerical values. In a column of "Number of feeding fault occurrence at the current time," information on whether or not a feeding fault breaks out at the current time is displayed. The example shown in Fig. 6 represents a condition that four-time wire blocking have already occurred in the section Q05 in total and the fifth wire feeding is now under retrial in the automatic wire feeding which is executed at the current time.

The leading end position of wire is represented by a change in indication of a line indicative of the wire while the wire path is being displayed. In the example shown in Fig. 6, it is indicated on the screen that the wire has already passed through the sections Q00 to Q04 (by a solid line), and the leading end of wire is now situated in the section Q05 (by a broken line). Indication by the dotted chain line means that the wire does not yet pass through the section Q06. It is obvious that there are various indication methods for an identification of the position of the wire leading end. For example, the section where the wire has already passed through is indicated by a blue, the section where the wire does not yet pass through is indicated by a yellow, and the section where the wire is now passing is indicated by a red with a flash. In that case, an operator could visually and easily grasp the feeding condition of wire.

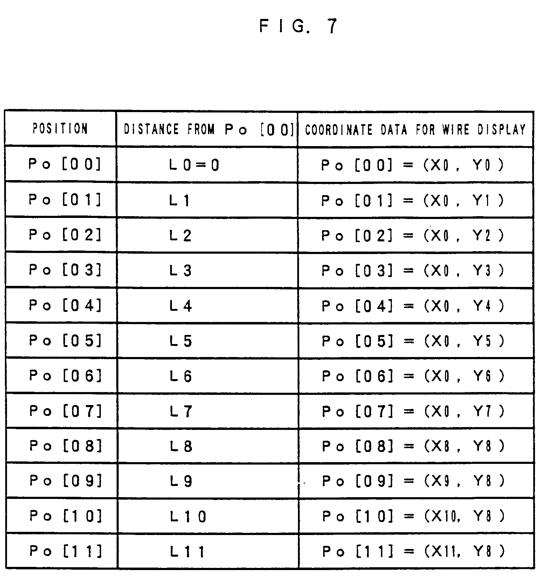

Such an indication of the wire leading end position is executed by the following procedures. A count of the register counting an output pulse from the encoder 11 is converted into a distance from the position Po [00] in the path, and the converted value is compared with distance preset data of Po [01] to Po [11] to determine a section Q, so that the determined section is indicated so as to be identified (with a red with a flash, etc.). In this case, coordinate data on the display screen corresponding to the respective positions Po [00] to Po [11] is required as shown in Fig. 7.

In Fig. 7, coordinate data of Po [00] to Po [07] are set for showing the wire in the vertical direction on the display screen; on the other hand, coordinate data of Po [08] to [11] are set for showing the wire in the horizontal direction on the display screen. The data memory 52 has already stored data equivalent to Fig. 7 in the format of data table where concrete numerical values have already been entered. These data are timely read out during an execution of a display program which will be described later, and displayed as shown in Fig. 6.

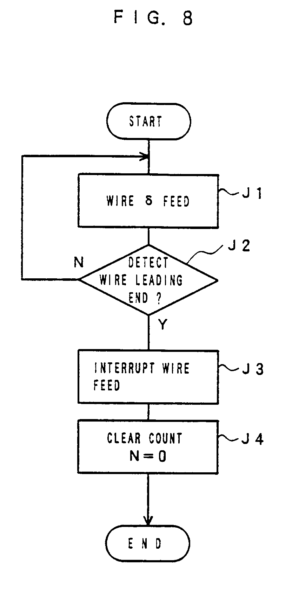

On the basis of the premise described above, an outline of processes executed by the CPU 51 in executing an automatic wire feeding will be described below with reference to Figs. 8 through 11. Let us assume that, prior to the automatic feeding, cutting operation of the leading end portion of wire (by means of the upper and lower cut electrodes 13 and 14) has already been carried out, and the leading end of the wire 20 is situated at a point located above the position of the electrode 14 (Po [00]). Further, let us assume that the function of the electrode 14 has been set to a mode for detecting the wire leading end (that is connected to the contact T2) by means of the electrode function switching section 66, and the clamp for clamping the electrode 13 is released. First, a process for setting a reference condition of the wire will be described below with reference to Fig. 8.

In the process for setting a reference condition, a wire feed is started so that the wire 20 is descended to the electrode 14 by the wire feed control section 64 (step J1), and the electrode 14 is immediately ready for sensing the wire leading end (step J2). The process for sensing the leading end is periodically repeated in accordance with the wire feed by every small distance $\delta$.

When the leading end of the wire 20 arrives at the electrode 14 and comes into contact therewith, the voltmeter V14 senses a change in a voltage, so that the wire leading end detecting section 68 detects the arrival of the wire leading end at the position Po [00]. The wire feed is stopped immediately when the wire leading end is detected (step J3). Subsequently, when a count N of the counter (register region set in memory) which counts a position pulse from the encoder 11, is reset to N = 0 (step J4), the process for setting a reference condition of the wire is completed.

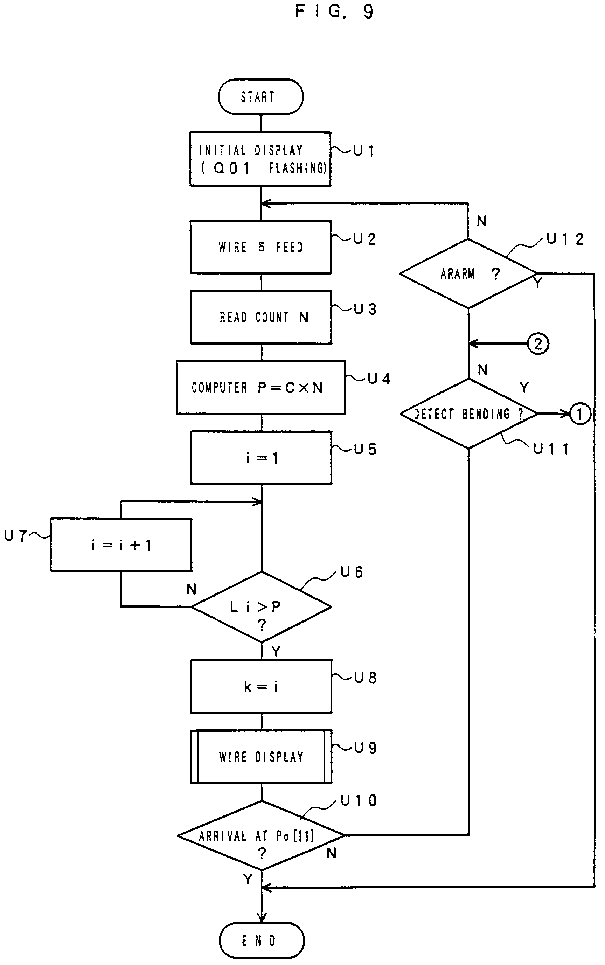

The following is the description on a process during an execution of automatic wire feeding on the basis of flowcharts shown in Figs. 9 to 11.

First, the initial editing screen is displayed on the display screen of Fig. 6 (step U1). In the initial display screen, the following display is given. For example, the wire in the section Q00 is shown by a blue, and the wire in the section Q01 is shown by a red flashing. Symbols *** ... are represented in all columns of "Number of fault occurrence at the current time" in the header "Retrial". In columns of "Total number of feeding fault" of the headers "Retrial" and "Disconnection", the number of feeding failure and disconnection fault occurrence stored in the data memory 52 is displayed.

Subsequently, the wire 20 feed is started (step U2), and a count N of the position pulse from the encoder 11 is read at a proper time-period (step U3), and further, the read count N is multiplied by conversion coefficient C to compute a distance P from the position Po [00] (step U4). Then, a position index "i" is reset to a count "1" (step U5), and a comparison is made in length between the position P and Li (distance to the position Po [i]) (step U6). The index "i" is incremented one by one until the distance Li exceeds the position P (step U7). In this case, the wire is fed to the upper guide entrance position Po [01] by making use of the clamp function (electrode plates 13a and 13b are closed to each other) of the electrode 13 and a descending operation of the pipe unit 12. The detailed explanation thereof is omitted (there is no influence on the position pulse output from the encoder 11 particularly).

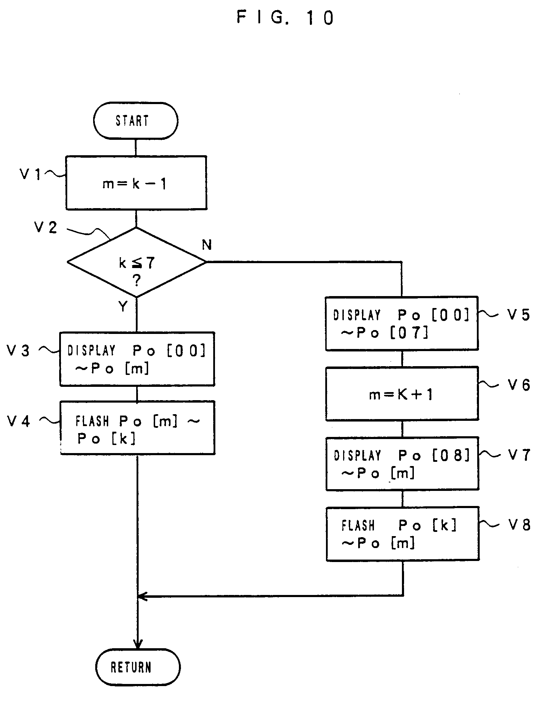

If the relation of Li > P is established, the sequence advances to step U8, and a first display index "k" is set as "k = 1" (step U8). And then, the sequence advances to step U9, and a wire display process is carried out therein. The content of the wire display process is described below with reference to a flowchart shown in Fig. 10. First, a second display index "m" is set as "m = k - 1 " (step V1), and a decision is made whether or not a relation of k ≦ 7 is established (step V2). If it is YES, it means that the wire leading end has not yet passed over the position Po [08]; therefore, the line ranging from the position Po [00] to the position Po [m] is indicated with blue color on the editing screen of Fig. 6 (step V3), and the line ranging from Po [m] to Po [k] is indicated with flashing red color (step V4), thus the display process being completed.

If a decision made in step V2 is "NO," the sequence advances to step V5. Then, the line ranging from the position Po [00] to the position Po [07] is indicated with blue color, and the second display index "m" is set as "m = k + 1 " (step V6). Further, the line ranging from the position Po [08] to the position Po [m] is indicated with blue color (step V7). Finally, the line ranging from the position Po [k] to the position Po [m] is indicated with flashing red color (step V8), thus the display process being completed (step U9).

Now, returning to the flowchart shown in Fig. 9, in step U10, a detection output from the feeding completion detector 80 is checked. If the wire arrives at the position Po [11], the feeding is completed; therefore, the feeding process ends.

If the wire has not yet arrived at the position Po [11], a detection output from the bending detector 40 is checked (step U11), and the generation of an alarm (feeding abandonment) signal is checked (step U12). The sequence advances to step U2, and the process described above is again executed. If wire feeding is satisfactorily carried out, and the wire has arrived at the position Po [11] without causing any feeding fault, then wire feeding process ends.

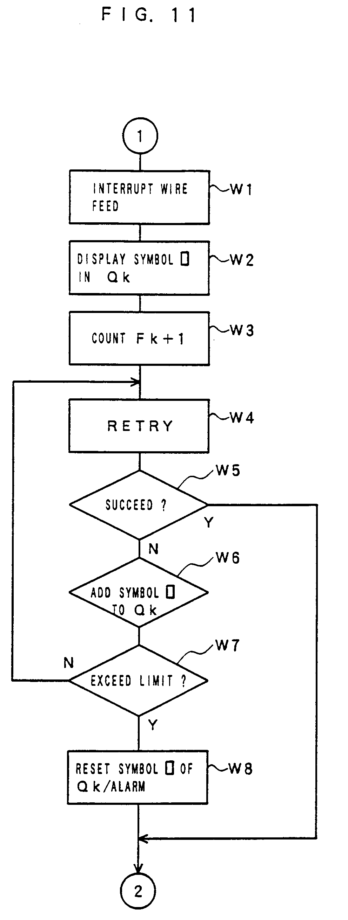

However, if the wire is blocked anywhere in the wire path, a decision YES is made in step U11, then feeding fault process is started. The process is described with reference to a flowchart shown in Fig. 11.

In the case where a feeding fault occurs, the wire feed is interrupted (step W1), and one symbol "□" is displayed on the column of a section Qk, where the feeding fault occurs, in the header "Retrial" (step W2). Subsequently, a count "1" is added to a storage value Fk of the register which records the total number of feeding faults occurring in the section Qk (step W3). In step W4, feeding is retried. More specifically, the wire 20 is lifted up by an adequate length, and again fed forward by an adequate length. A decision is made whether the retrial operation succeeds or fails on the basis of contact or non-contact of the wire 20 with the bending detecting electrode 40 during the aforesaid lifting up and feeding forward of the wire 20 (step W5).

In the case where the retrial operation fails, one symbol "□" is added to the column of the section Qk (step W6), and a check is made whether the total number of retrial exceeds a retrial limit number (in this case, nine is set as the limit number) which is set to a predetermined number (step W7). If it exceeds the retrial limit number (that is, when the total number gets to ten), then a decision is made that it is impossible to carry out a feeding operation, and symbols "□" displayed in the column of the section Qk are reset and further an alarm signal is generated (step W8), thus feeding fault process ends.

If the total number of retrial does not exceed the retrial limit number in step W7, the sequence advances to step W4, and a feeding is again tried. Therefore, if the retrial succeeds within the retrial limit number of retrials, the feeding fault process is completed without generating an alarm signal.

The sequence again returns to step U12 of the flowchart shown in Fig. 9 after the feeding fault process ends. In the step U12, a check is made of the presence of a generation of an alarm signal in step W8 of the flowchart shown in Fig. 9. As described above, if the total number of retrial exceeds the limit number, the feeding process ends by giving up the feeding. On the other hand, when the retrial has succeeded within the retrial limit number of retrials, the sequence again returns to Step U2 and feeding process continues to be carried out. The subsequent process is performed in a manner as described above. After all, the feeding process is completed by either succeeding in feeding the wire to the point Po[11] (in the case of feeding success) or giving up wire feeding.

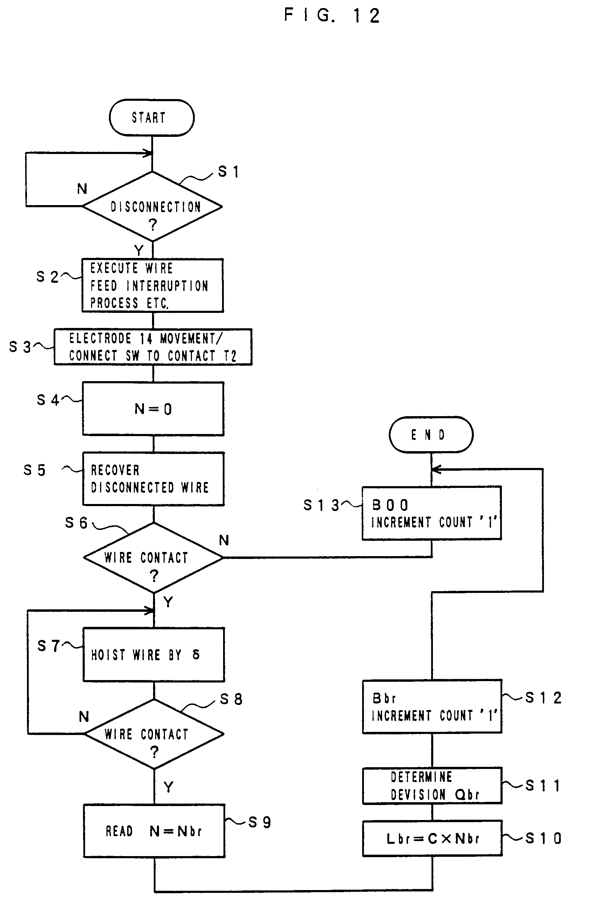

Finally, the following is the brief description on a disconnection fault position detection/record process on the basis of a flowchart shown in Fig. 12.

When a wire electric discharge machine starts normal machining, the disconnection fault position detection/record process is simultaneously started. The CPU 51 is immediately ready to sense a wire disconnection, and senses the presence of the disconnection at a predetermined time period via the disconnection detecting section 65 (step S1).

If a disconnection occurs anywhere in the wire path, the CPU 51 immediately outputs a command signal to the respective control sections so that their sections execute necessary steps such as a wire feed interruption (step S2). Almost simultaneously, the electrode 14 is moved from the retreat position separating from the wire 20 to the advance position capable of coming into contact with the wire 20 by means of the control section 70. The switch device SW is connected to the contact T2 by operating the function switching section 66 (step S3), and a count of the register counting a position pulse from the encoder 11 is reset (N = 0) (step S4).

Subsequently, the wire which has been cut off by disconnection is collected by rotating the pulling-out roller 16 (step S5). At this point of time, the wire passage detecting section 67 checks whether or not the wire 20 comes into contact with the wire passage detecting electrode 14 (step S6). More specifically, if the wire 20 comes into contact with the wire leading end detecting electrode 14, a small current flows from the power source E14 for the wire leading end detection to the wire, which is virtually in an earth potential, through the resister element R14; therefore, the potential of the electrode 14 is also virtually kept in an earth potential. If the wire 20 is in a non-contact state, most of the voltage from the power source E14 for the wire leading end detection is applied to the electrode 14, and the applied voltage is detected by means of the voltmeter V14.

In the case where the non-contact with the wire is detected in step S6, a decision is made that a disconnection fault occurs at any point above the wire leading end detecting electrode 14 (on the pipe unit 12 side), and the sequence advances to step S13. In the step S13, a count B00, which corresponds to the section Q00 in the register addressed on every section in the data memory 53, is incremented by a count "1" (in this case, sections are formed in a manner as shown in Fig. 6).

If a disconnection fault occurs at any point on the downstream side from the wire leading end detecting electrode 14, a decision YES is made in step S6, and the wire 20 is lifted up for detecting further detailed disconnection position. The present embodiment employs a method of lifting up the wire 20 by every small feed distance $\delta$ , and repeating a process of sensing whether or not the wire 20 comes into contact with the electrode 14 on every completion of the lift-up of the wire by the micro feed $\delta$ (contact/non-contact)(step S7, step S8).

At the point of time the leading end of the wire 20 is detected (non-contact), the lift-up of the wire 20 is stopped, and the CPU reads a count N = Nbr of the register counting an output pulse from the encoder 11 (step S9). Then, a wire lift-up feed Lbr (length or distance) from the position where a disconnection fault occurs is computed by multiplying a conversion factor C for converting a position pulse from the encoder into a path length, which has been determined in advance, by count value Nbr (step S10), and a section where the disconnection fault occurs is decided on the basis of the count (step S11). Pursuant to the decision result, the count Bbr of the register addressed for every section in the data memory 53 is incremented by count "1" in the same manner as in step S13 (step S12).

The process described above is executed every time a disconnection fault occurs; therefore, the total number of disconnection occurrence can be displayed in the column of each section in the header "<u>Disconnection</u>" on the display editing screen shown in Fig. 6.

As described above, the present invention can provide a wire feeding condition display device which is capable of successively or in order detecting a wire feed in executing an automatic wire feeding, and displaying a progressing condition of the wire feeding in a real time in accordance with the detection result. Therefore, it is possible to confirm whether or not the wire feeding is satisfactorily being executed, as the time goes by.

Further, a position where a wire feeding fault occurs is displayed on the screen by making use of the wire bending detection means; therefore, suitable measures can be quickly taken against the feeding fault. Furthermore, information on a history of the wire feeding fault occurrence is displayed on the screen, so that it is convenient for the maintenance of a wire electric discharge machine.

Information on the wire leading end position or on a fault occurrence position can be displayed by different display methods. For example, there is a desirable display method of displaying the wire path, which is divided into several sections, with a graphic display, and displaying the wire leading end position or a feeding fault occurrence position on the graphic display by making use of local displays (such as a flashing spot, a dark spot and a cursor) or an identification (section) display for showing the entire sections of the wire path. Also, it is effective to emphatically display the position/section where the wire is passing through or where a feeding fault occurs by making use of flashing means etc.

The wire feed amount that gives an information on wire feeding condition can be detected on the basis of a rotational speed of the motor for driving the wire feed roller or a shaft rotating in association with the motor. Based on the feed information described above, a wire disconnection position is found out. The rotational speed can be easily measured by means of a well-known encoder and counter means of counting a position pulse from the encoder.

To determine the wire position, there is need of setting the original point (reference condition: wire feed start position) in the wire position measurement. For example, provided that counter means of counting an output pulse from the encoder has a configuration such that the counter count is cleared (count N = 0) when the wire is in a reference condition (typically, the wire leading end is situated in a predetermined point in the wire path) (see the present embodiment), the subsequent wire feed is proportional to the counter count. Therefore, if proportional coefficient C is previously provided for converting the counter count into the wire feed (the unit is a distance (length)) according to calculation based on calibration or design data, it is possible to grasp the distance between the wire (leading end) position or the position where a feeding fault occurs and a predetermined position in the wire path.

Further, provided that positional relation between individual parts (each electrode, workpiece, guide, roller, etc.) in the wire path is preset as distance data and the wire path is divided into several sections according to a suitable dividing method, the wire position or the feeding fault occurrence position can be displayed for every section on the basis of distance information (position pulse count data or data converted the count data into a distance) indicative of the wire position or the feeding fault occurrence position.

Furthermore, every time a wire feeding fault occurs, the information is stored in memory for every section, and is read out as occasion demands; therefore, the read-out information is shown by a suitable display method. Thus, an operator can visually grasp a feeding fault occurrence frequency for every section. Information on such a feeding fault occurrence history is greatly worth using as reference data for maintenance/control or improvement of design of a wire electric discharge machine.

**Claims**

1. A wire feeding condition detecting device in a wire electric discharge machine, comprising:

   wire feed start detection means (14) for detecting that the leading end of a wire (20) passes through a wire feed start position (Po[00]) in a wire path, when the wire (20) is fed along the wire path by means of wire feed means (4) in an automatic wire feeding operation;
   wire feed output means (11) for outputting information on a feed when the wire (20) is fed along said wire path by means of said wire feed means (4);
   wire leading end position computation means for computing how far the wire leading end advances from said wire feed start position (Po[00]) along the wire path and where it is now situated in said wire path, on the basis of a detection signal from said wire feed start position detection means (14) and an output from said wire feed output means (11); and
   wire feed condition display means (69) for finding out where the wire leading end is situated in a plurality of sections (Q) of the wire path, which is previously partitioned, on the basis of an output from said wire leading end position computation means, and for displaying a section (Q) where the leading end of the wire (20) fed for feeding reaches at present so that the wire condition can visually be recognized, on the display screen (69).

2. A wire feeding condition detecting device according to claim 1, wherein said device further includes feeding fault occurrence detection means (40) for interrupting said wire feed means (4) by detecting that the leading end of the wire (20) fed by said wire feed means (4) is in a state incapable of advancing ahead any more because the leading end is blocked on the way of the wire path, and feeding fault display means (69) for displaying information on a section (Q) where a feeding fault occurs among said plurality of sections on said display screen of said wire feed condition display means (69), on the basis of the detection output from said feeding fault occurrence detection means (40).

3. A wire feeding condition detecting device according to claim 2, wherein said feeding fault occurrence detection means (40) is located near said wire feed means (4) in said wire path, and detects a bending of the wire (20) caused for the reason that the leading end of the wire (20) fed by said wire feed means (4) is blocked on the way of the wire path and therefore the advance of the wire (20) is obstructed.

4. A wire feeding condition detecting device according to claim 2 or 3, wherein said device further includes wire feeding fault occurrence count memory means (53) for counting the number of the feeding fault occurrence displayed by said display means (69) for every said section (Q), and wire feeding fault count display means (69) for displaying the number of feeding faults, which occurred in each section (Q) in the past, on said display screen of said wire feed condition display means (69) on the basis of the content stored in said memory means (53).

5. A wire feeding condition detecting device according to any one of the preceding claims, wherein said wire feed start position detection means (14) is also used as one of a pair of wire cut electrodes (13, 14) located along said wire path, the other of which is closer to said wire feed means (4).

6. A wire feeding condition detecting device according to any one of the preceding claims, wherein said device is provided with feed completion detection means (80) which is situated on the downstream side in the wire traveling direction on the wire path from a wire pulling-out roller (16) and which detects the passage of the leading end of the wire (20) traveling along the wire path,

said sections (Q) of the wire path being preset by dividing the path from a position of said feed start position detection means (14) to a position of said feed completion detection means (80), into plural sections, in consideration of each position of at least part of various elements such as an upper guide (7), an upper machining electrode (30a), an upper die (72), a workpiece, a lower die (8), a lower machining electrode (30b), a turning roller (23), a guide pipe (25) in a lower frame (2), and said wire pulling-out roller (16), which are individually located on the way of the wire path.

7. A wire feeding condition detecting device according to claim 4, or claim 5 or 6 when appended to claim 4, wherein said device further includes disconnection information display means for computing information on a section (Q) where a disconnection occurs among said sections on the wire path, on the basis of an output from said wire feed means (4) when a disconnected wire is wound up by reverse rotation of said wire feed means (4), and a signal indicative that the passage of the portion of disconnected wire is detected by means of said wire feed start position detection means (14), and storing the result in said memory means (53), thus displaying data stored in said memory means (53) on the display screen of said wire feed condition display means (69).

**Patentansprüche**

1. Drahtvorbewegungszustands-Erfassungseinrichtung in einer elektrischen Entladungsdrahtschneidemaschine, die umfaßt:

ein Drahtvorbewegungsstart-Erfassungsmittel (14) zum Erfassen, daß das vordere Ende eines Drahts (20) eine Drahtvorbewegungsstartposition (Po[00]) in einem Drahtweg durchläuft, wenn der Draht (20) in einem selbsttätigen Drahtvorbewegungsvorgang durch ein Drahtvorbewegungsmittel (4) längs des Drahtwegs vorbewegt wird,
ein Drahtvorbewegungs-Informationsausgabemittel (11) zum Ausgeben von Information über eine Vorbewegung, wenn der Draht (20) durch das Drahtvorbewegungsmittel (4) längs des Drahtwegs vorbewegt wird,
ein Drahtvorderendepositions-Berechnungsmittel zum Berechnen, wie weit sich das vordere Ende des Drahts aus der Drahtvorbewegungsstartposition (Po[00]) heraus längs des Drahtwegs vorbewegt und wo es sich augenblicklich in dem Drahtweg befindet, auf der Grundlage eines Erfassungssignals aus dem Drahtvorbewegungsstart-Erfassungsmittel (14) und eines Ausgangssignals aus dem Drahtvorbewegungs-Infornationsausgabemittel (11) und
ein Drahtvorbewegungszustands-Anzeigemittel (69) zum Herausfinden, wo sich das vordere Ende des Drahts in einer Vielzahl von Abschnitten (Q) des Drahtwegs befindet, der vorab unterteilt ist, auf der Grundlage eines Ausgangssignals aus dem Drahtvorderendepositions-Berechnungsmittel und zum Anzeigen eines Abschnitts (Q), in dem das vordere Ende des Drahts (20), der zum Zuführen vorbewegt wird, gegenwärtig eintrifft, so daß der Drahtzustand auf dem Anzeigebildschirm des Drahtvorbewegungszustands-Ahzeigemittels (69) visuell erkannt werden kann.

2. Drahtvorbewegungszustands-Erfassungseinrichtung nach Anspruch 1, wobei die Einrichtung ferner enthält:

ein Vorbewegungsfehlerereignis-Erfassungsmittel (40) zum Unterbrechen des Betriebs des Drahtvorbewegungsmittels (4) durch Erfassen, daß sich das vordere Ende des Drahts (20), der durch das Drahtvorbewegungsmittel (4) vorbewegt wird, in einem Zustand befindet, in dem er nicht weiter vorzubewegen ist, weil das vordere Ende auf dem Drahtweg blockiert ist, und
ein Vorbewegungsfehler-Anzeigemittel (69) zum Anzeigen von Information über einen Abschnitt (Q) unter der Vielzahl von Abschnitten, wo ein Vorbewegungsfehler auftritt, auf dem Anzeigebildschirm des Drahtvorbewegungszustands-Anzeigemittels (69) auf der Grundlage des Erfassungsausgangssignals aus dem Vorbewegungsfehlerereignis-Erfassungsmittel (40).

3. Drahtvorbewegungszustands-Erfassungseinrichtung nach Anspruch 2, wobei das Vorbewegungsfehlerereignis-Erfassungsmittel (40) nahe dem Drahtvorbewegungsmittel (4) in dem Drahtweg angeordnet ist und eine Biegung des Drahts (20) erfaßt, die aus dem Grund verursacht ist, daß vordere Ende des Drahts (20), der durch das Drahtvorbewegungsmittel (4) vorbewegt wird, auf dem Drahtweg blockiert ist und daher die Vorbewegung des Drahts (20) behindert wird.

4. Drahtvorbewegungszustands-Erfassungseinrichtung nach Anspruch 2 oder 3, wobei die Einrichtung ferner enthält:

ein Drahtvorbewegungsfehlerereigniszähl-Speichermittel (53) zum Zählen der Anzahl von Vorbewegungsfehlerereignissen, die durch das Anzeigemittel (69) für jeden Abschnitt (Q) angezeigt werden, und

ein Drahtvorbewegungsfehlerzähl-Anzeigemittel (69) zum Anzeigen der Anzahl von Vorbewegungsfehlern, die in der Vergangenheit in jedem Abschnitt (Q) auftraten, auf dem Anzeigebildschirm des Drahtvorbewegungszustands-Anzeigemittels (69) auf der Grundlage des Inhalts, der in dem Speichermittel (53) gespeichert ist.

5. Drahtvorbewegungszustands-Erfassungseinrichtung nach einem der vorhergehenden Ansprüche, wobei das Drahtvorbewegungsstart-Erfassungsmittel (14) außerdem als eine eines Paares von Drahtabschneideelektroden (13, 14) benutzt wird, die längs des Drahtwegs angeordnet sind, wobei sich die andere derselben näher an dem Drahtvorbewegungsmittel (4) befindet.

6. Drahtvorbewegungszustands-Erfassungseinrichtung nach einen der vorhergehenden Ansprüche, wobei die Einrichtung mit einem Vorbewegungsbeendigungs-Erfassungsmittel (80) versehen ist, das sich in der Drahtbewegungsrichtung auf dem Drahtweg auf der stromabwärtigen Seite von einer Drahtausziehrolle (16) befindet und das den Durchlauf des vorderen Endes des Drahts (20) erfaßt, der sich längs des Drahtwegs bewegt,

wobei die Abschnitte (Q) des Drahtwegs durch Unterteilen des Wegs von einer Position des Drahtvorbewegungsstart-Erfassungsmittels (14) aus zu einer Position des Vorbewegungsbeendigungs-Erfassungsmittels (80) hin in eine Vielzahl von Abschnitten unter Inbetrachtziehung jeder Position zumindest eines Teils verschiedenartiger Elemente, wie eine obere Führung (7), eine obere Bearbeitungselektrode (30a), ein oberes Mundstück (72), ein Werkstück, ein unteres Mundstück (18), eine untere Bearbeitungselektrode (30b), eine Umlenkrolle (23), ein Führungsrohr (25) in einem unteren Rahmen (2) und die Drahtausziehrolle (16), voreingestellt ist, welche Elemente individuell auf dem Drahtweg angeordnet sind.

7. Drahtvorbewegungszustands-Erfassungseinrichtung nach Anspruch 4 oder nach Anspruch 5 oder 6 bei deren Rückbeziehung auf Anspruch 4, wobei die Einrichtung ferner ein Unterbrechungsinformations-Anzeigemittel enthält zum Berechnen von Information über einen Abschnitt (Q) unter den Abschnitten, wo eine Unterbrechung auf dem Drahtweg auftritt, auf der Grundlage eines Ausgangssignals aus dem Drahtvorbewegungsmittel (4), wenn ein unterbrochener Draht durch eine Rückwärtsdrehung des Drahtvorbewegungsmittels (4) aufgewickelt wird, und eines Signals, das anzeigt, daß der Teil des unterbrochenen Drahts durch das Drahtvorbewegungsstart-Erfassungsmittel (14) erfaßt ist, und Speichern des Ergebnisses in dem Speichermittel (53), um auf diese Weise Daten, die in dem Speichermittel (53) gespeichert sind, auf dem Anzeigebildschirm des Drahtvorbewegungszustands-Anzeigemittels (69) anzuzeigen.

## Revendications

1. Dispositif de détection d'une condition d'alimentation de fil dans une machine d'étincelage à l'aide d'un fil, comprenant:

un moyen de détection de départ d'alimentation de fil (14) pour détecter le fait que l'extrémité avant d'un fil (20) passe par une position de départ d'alimentation de fil (Po[00]) dans une voie pour le fil lorsque le fil (20) est alimenté le long de la voie pour le fil à l'aide d'un moyen d'alimentation de fil (4) dans une opération d'alimentation de fil automatique,
un moyen de sortie d'alimentation de fil (11) pour transmettre des informations concernant une alimentation lorsque le fil (20) est alimenté le long de ladite voie pour le fil à l'aide dudit moyen d'alimentation de fil (4);
un moyen de calcul de la position de l'extrémité avant du fil pour calculer l'avance de l'extrémité avant du fil par rapport à ladite position de départ d'alimentation de fil (Po[00]) le long de la voie pour le fil et l'endroit où elle est à présent située dans ladite voie pour le fil, sur base d'un signal de détection provenant dudit moyen de détection de la position de départ d'alimentation de fil (14) et d'une sortie provenant dudit moyen de sortie d'alimentation de fil (11); et
un moyen d'affichage de la condition d'alimentation de fil (69) pour détecter l'endroit où est située l'extrémité avant du fil dans plusieurs sections (Q) de la trajectoire du fil, qui a été subdivisée au préalable, sur la base d'une sortie provenant dudit moyen de calcul de la position de l'extrémité avant du fil, et pour afficher une section (Q) qu'a atteint à ce moment l'extrémité avant du fil (20) alimenté, si bien que l'on peut voir à l'oeil nu la condition du fil sur l'écran d'affichage (69).

2. Dispositif de détection d'une condition d'alimentation de fil selon la revendication 1, dans lequel ledit dispositif englobe en outre un moyen de détection (40) de l'apparition de défaillances d'alimentation pour interrompre ledit moyen d'alimentation de fil (4) en détectant que l'extrémité avant du fil (20) alimenté par ledit moyen d'alimentation de fil (4) se trouve dans un état dans lequel il est incapable de progresser davantage vers l'avant par le fait que l'extrémité avant est bloquée sur la trajectoire du fil, et un moyen d'affichage de défauts d'alimentation (69) pour afficher des informations quant à une section (Q) dans laquelle un défaut d'alimentation se produit, parmi lesdites plusieurs sections, sur ledit écran d'affichage dudit moyen d'affichage (69) de la condition d'alimentation du fil, sur la base de la sortie de détection provenant dudit moyen de détection d'apparition de défauts d'alimentation (40).

3. Dispositif de détection d'une condition d'alimentation de fil selon la revendication 2, dans lequel ledit moyen de détection d'apparition de défauts d'alimentation (40) est situé à proximité dudit moyen d'alimentation de fil (4) dans ladite voie pour le fil et détecte une flexion du fil (20) due au fait que l'extrémité avant du fil (20) alimenté par ledit moyen d'alimentation de fil (4) est bloquée sur la trajectoire du fil, faisant en sorte que l'avance du fil (20) est bloquée.

4. Dispositif de détection d'une condition d'alimentation de fil selon la revendication 2 ou 3, dans lequel ledit dispositif englobe en outre un moyen de mémoire de comptage des apparitions de défauts d'alimentation de fil (53) pour compter le nombre d'apparitions de défauts d'alimentation affichés par ledit moyen d'affichage (69) pour chacune desdites sections (Q) et un moyen d'affichage du nombre de défauts d'alimentation de fil (69) pour afficher le nombre de défauts d'alimentation qui se sont produits par le passé dans chaque section (Q), sur ledit écran d'affichage dudit moyen d'affichage d'état d'alimentation de fil (69) sur la base du contenu stocké dans ledit moyen de mémoire (53).

5. Dispositif de détection d'une condition d'alimentation de fil selon l'une quelconque des revendications précédentes, dans lequel ledit moyen de détection (14) de la position de départ d'alimentation de fil est également utilisé sous la forme d'une des électrodes de découpe de fil (13, 14) formant une paire, située le long de ladite voie pour le fil, l'autre étant située plus près dudit moyen d'alimentation de fil (4).

6. Dispositif de détection d'une condition d'alimentation de fil selon l'une quelconque des revendications précédentes, dans lequel ledit dispositif est muni d'un moyen de détection d'achèvement d'alimentation (80) qui est situé sur le côté aval dans la direction de défilement du fil sur la trajectoire du fil par rapport à un rouleau de dévidage de fil (16) et qui détecte le passage de l'extrémité avant du fil (20) défilant le long de la voie pour le fil,

lesdites sections (Q) de la voie pour le fil étant préétablies en subdivisant la trajectoire, depuis la position détectée par le moyen de détection de position de départ d'alimentation (14) jusqu'à une position détectée par ledit moyen de détection d'achèvement d'alimentation (80), en plusieurs sections, en considérant chaque position comme représentant au moins une partie de divers éléments tels qu'un guide supérieur (7), une électrode d'usinage supérieure (30a), une matrice supérieure (72), une pièce à usiner, une matrice inférieure (8), une électrode d'usinage inférieure (30b), un rouleau rotatif (23), un conduit de guidage (25) dans un bâti inférieur (2) et ledit rouleau de dévidage de fil (16), qui sont disposés de manière individuelle sur la voie suivie par la voie pour le fil.

7. Dispositif de détection d'une condition d'alimentation de fil selon la revendication 4 ou selon la revendication 5 ou 6 lorsqu'elle dépend de la revendication 4, dans lequel ledit dispositif englobe en outre un moyen d'affichage d'informations de déconnexion pour effectuer des calculs sur les informations liées à la section (Q) dans laquelle une déconnexion a lieu parmi lesdites sections sur la voie pour le fil, sur la base d'une sortie provenant dudit moyen d'alimentation de fil (4) lorsqu'un fil déconnecté est enroulé par rotation inverse dudit moyen d'alimentation de fil (4), et d'un signal indiquant que le passage de la portion de fil déconnecté est détecté à l'aide dudit moyen de détection de la position de départ d'alimentation de fil (14), et pour stocker le résultat dans ledit moyen de mémoire (53) pour ainsi afficher les données stockées dans ledit moyen de mémoire (53) sur l'écran d'affichage dudit moyen d'affichage d'état d'alimentation de fil (69).

## FIG. 1

FIG.2

FIG.3

FIG.4

FIG. 5

EP 0 664 179 B1

FIG. 6

HEIGHT OF
UPPER GUIDE              :50. 000
THICKNESS OF
WORKPIECE               :40. 000
HEIGHT OF LOWER
SURFACE OF WORKPIECE; 0. 000

POSITION OF ELECTRODE 14/FEED START POSITION ← Po [00]

UPPER GUIDE ENTRANCE ← Po [01]

UPPER MACHINING ELECTRODE ← Po [02]

UPPER DIE ← Po [03]

← Po [04]

WORKPIECE

WORK TABLE

LOWER DIE ← Po [05]

LOWER MACHINING ELECTRODE ← Po [06]

FEEDING COMPLETION DETECTOR 80    FEED ENTRANCE    PIPE ENTRANCE    TURNING ROLLER (LOWER GUIDE ROLLER) ← Po [07]

Po [11]    Q11    Q10    Po [10]    Q09    Q08 ← Po [08]

← Po [09]

Q00, Q01, Q02, Q03, Q04, Q05, Q06, Q07, Q08, Q09, Q10, Q11

| RETRIAL | | |
|---|---|---|
| SECTION | TOTAL | CURRENT |
| Q00 | 0 | ********** |
| Q01 | 0 | ********** |
| Q02 | 0 | ********** |
| Q03 | 0 | ********** |
| Q04 | 0 | ********** |
| Q05 | 17 | ▯▯▯▯****** |
| Q06 | 2 | ********** |
| Q07 | 0 | ********** |
| Q08 | 3 | ********** |
| Q09 | 0 | ********** |
| Q10 | 1 | ********** |
| Q11 | 0 | ********** |

| DISCONNECTION | |
|---|---|
| SECTION | TOTAL |
| Q00 | 0 |
| Q01 | 0 |
| Q02 | 0 |
| Q03 | 1 |
| Q04 | 0 |
| Q05 | 5 |
| Q06 | 1 |
| Q07 | 0 |
| Q08 | 0 |
| Q09 | 0 |
| Q10 | 0 |
| Q11 | 0 |

17

F I G. 7

| POSITION | DISTANCE FROM P o [0 0] | COORDINATE DATA FOR WIRE DISPLAY |
|---|---|---|
| P o [0 0] | L 0 = 0 | P o [0 0] = (X0, Y0) |
| P o [0 1] | L 1 | P o [0 1] = (X0, Y1) |
| P o [0 2] | L 2 | P o [0 2] = (X0, Y2) |
| P o [0 3] | L 3 | P o [0 3] = (X0, Y3) |
| P o [0 4] | L 4 | P o [0 4] = (X0, Y4) |
| P o [0 5] | L 5 | P o [0 5] = (X0, Y5) |
| P o [0 6] | L 6 | P o [0 6] = (X0, Y6) |
| P o [0 7] | L 7 | P o [0 7] = (X0, Y7) |
| P o [0 8] | L 8 | P o [0 8] = (X8, Y8) |
| P o [0 9] | L 9 | P o [0 9] = (X9, Y8) |
| P o [1 0] | L 1 0 | P o [1 0] = (X10, Y8) |
| P o [1 1] | L 1 1 | P o [1 1] = (X11, Y8) |

F I G. 8

```
                    ┌──────────┐
                    │  START   │
                    └──────────┘
                          │
       ┌─────────────────→│
       │            ┌──────────────┐
       │            │ WIRE δ FEED  │ ～J 1
       │            └──────────────┘
       │                  │
       │               ╱─────╲
       │   N         ╱ DETECT  ╲  ～J 2
       └───────────<  WIRE LEADING >
                     ╲   END ?  ╱
                      ╲───────╱
                          │ Y
                    ┌──────────────┐
                    │INTERRUPT WIRE│ ～J 3
                    │FEED          │
                    └──────────────┘
                          │
                    ┌──────────────┐
                    │ CLEAR COUNT  │ ～J 4
                    │   N = 0      │
                    └──────────────┘
                          │
                    ┌──────────┐
                    │   END    │
                    └──────────┘
```

F I G. 9

START

INITIAL DISPLAY (Q01 FLASHING) — U1

WIRE δ FEED — U2

READ COUNT N — U3

COMPUTER P = C × N — U4

i = 1 — U5

U7 — i = i + 1

U6 — L i > P ? N / Y

k = i — U8

WIRE DISPLAY — U9

ARRIVAL AT Po [11] ? — U10 N / Y

ARARM ? — U12 N / Y

2

DETECT BENDING ? — U11 N / Y

1

END

FIG. 10

```
                    ┌──────────┐
                    │  START   │
                    └──────────┘
                         │
              ┌──────────────────────┐
        V1 ~  │      m = k − 1       │
              └──────────────────────┘
                         │
        V2  ╱╲
           ╱    ╲              N
          ╱ k ≦ 7 ╲ ──────────────────────────┐
          ╲   ?   ╱                            │
           ╲    ╱                              │
            ╲ ╱                                │
             │ Y                    ┌──────────────────────┐
             │                      │ DISPLAY  Po [00]      │ ~ V5
   ┌──────────────────────┐         │   ~Po [07]            │
V3 ~│ DISPLAY  Po [00]     │        └──────────────────────┘
   │   ~Po [m]             │                   │
   └──────────────────────┘         ┌──────────────────────┐
             │                      │      m = K + 1        │ ~ V6
   ┌──────────────────────┐         └──────────────────────┘
V4 ~│ FLASH Po [m] ~       │                   │
   │   Po [k]              │        ┌──────────────────────┐
   └──────────────────────┘         │ DISPLAY  Po [08]      │ ~ V7
             │                      │   ~Po [m]             │
             │                      └──────────────────────┘
             │                                 │
             │                      ┌──────────────────────┐
             │                      │ FLASH   Po [k]        │ ~ V8
             │                      │   ~Po [m]             │
             │                      └──────────────────────┘
             │                                 │
             │◄────────────────────────────────┘
             │
        ┌──────────┐
        │  RETURN  │
        └──────────┘
```

# F I G. 11

F I G. 1 2